(19) Europäisches Patentamt
European Patent Office
Office européen des brevets

(11) Veröffentlichungsnummer: **0 375 972 B1**

(12) **EUROPÄISCHE PATENTSCHRIFT**

(45) Veröffentlichungstag der Patentschrift: **08.06.94**

(51) Int. Cl.⁵: **C08G 77/62**, C04B 35/58

(21) Anmeldenummer: **89122053.5**

(22) Anmeldetag: **29.11.89**

# (54) Polymere Hydridochlorsilazane, Verfahren zu ihrer Herstellung, sowie deren Verwendung zur Herstellung Siliziumnitrid enthaltender keramischer Materialien.

(30) Priorität: **03.12.88 DE 3840774**

(43) Veröffentlichungstag der Anmeldung:
**04.07.90 Patentblatt 90/27**

(45) Bekanntmachung des Hinweises auf die Patenterteilung:
**08.06.94 Patentblatt 94/23**

(84) Benannte Vertragsstaaten:
**CH DE FR GB IT LI**

(56) Entgegenhaltungen:
**EP-A- 0 228 148**
**EP-A- 0 266 912**
**EP-A- 0 266 918**
**EP-A- 0 313 878**
**US-A- 4 482 669**

**PATENT ABSTRACTS OF JAPAN, Band 13, Nr. 339 (C-624)[3687], 31. Juli 1989; & JP-A-1 118 528**

(73) Patentinhaber: **HOECHST AKTIENGESELLSCHAFT**
**D-65926 Frankfurt(DE)**

(72) Erfinder: **Vaahs, Tilo, Dr.**
**Am Flachsland 54**
**D-6233 Kelkheim(Taunus)(DE)**
Erfinder: **Gerdau, Thomas, Dr.**
**Königsteiner Strasse 17**
**D-6239 Eppstein/Taunus(DE)**
Erfinder: **Kleiner, Hans-Jerg, Dr.**
**Altkönigstrasse 11a**
**D-6242 Kronberg/Taunus(DE)**
Erfinder: **Peuckert, Marcellus, Dr.**
**Platanenweg 8**
**D-6238 Hofheim am Taunus(DE)**
Erfinder: **Brück, Martin**
**Haneckstrasse 17**
**D-6238 Hofheim am Taunus(DE)**

EP 0 375 972 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft polymere Hydridochlorsilazane, ihre Herstellung, sowie ihre Weiterverarbeitung zu Siliziumnitrid enthaltendem keramischem Material.

Die Pyrolyse von Polysilazanen zu Siliziumnitrid enthaltendem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669). Nach US-PS 4 482 669 wird ein Dichlorhydridoorganylsilan der Formel $RSiHCl_2$ mit $NH_3$ zu Oligohydridoorganylsilazanen $(RSiHNH)_n$ umgesetzt und diese dann, z.B. mit Hilfe von KH unter Wasserstoffeliminierung zu Polysilazanen kondensiert.

Die vorliegende Erfindung stellt neue Ausgangsmaterialien für Polyhydridosilazane zur Verfügung, nämlich polymere Hydridochlorsilazane.

Aus der veröffentlichten Europäischen Patentanmeldung 0 266 918 ist es bereits u.a. bekannt, Oligohydridoorganylsilazane der Formel $(CH_3SiHNH)_n$ mit Chlorsilanen der Formel $RSiCl_3$ in einem inerten, im wesentlichen wasserfreien Medium zu präkeramischen Polymeren umzusetzen und diese direkt oder nach Behandlung mit $NH_3$ zu keramischen Material zu pyrolysieren.

Ein Gegenstand der vorliegenden Erfindung ist ein Verfahren zur Herstellung von polymeren Hydridochlorsilazanen, dadurch gekennzeichnet, daß man Oligohydridoorganylsilazane der allgemeinen Formel $(R^1SiHNH)_n$, worin n 3 bis 12 ist, mit mindestens einem der Chlorsilane, $R^2SiHCl_2$, $R^3SiCl_3$, $Cl_2R^4Si\text{-}CH_2CH_2\text{-}SiR^4Cl_2$, $Cl_3Si\text{-}CH_2CH_2\text{-}SiR^5Cl_2$ bei 30 °C bis 300 °C umsetzt, wobei unabhängig voneinander $R^1$, $R^2$, $R^3$, $R^4$, $R^5$ = $C_1$-$C_6$-Alkyl- oder $C_2$-$C_6$-Alkenylgruppe und wobei $R^2SiHCl_2$ und $R^3SiCl_3$ nur im Gemisch mit mindestens einem der $R^4$ oder $R^5$ enthaltenden Chlorsilane eingesetzt werden. Vorzugsweise wird die Umsetzung mit mindestens einem der Chlorsilane $R^2SiHCl_2$, $Cl_2R^4Si\text{-}CH_2CH_2\text{-}SiR^4Cl_2$, $Cl_3Si\text{-}CH_2CH_2\text{-}SiR^5Cl_2$ durchgeführt.

Bei der Reaktion werden leichtflüchtige Nebenprodukte wie $R^1SiHCl_2$ und $R^1SiH_2Cl$, und daneben auch etwas Wasserstoff, gebildet. Diese zwangsläufig anfallenden Chlorsilane können destillativ getrennt werden. Dabei sind die Chlorsilane der Formel $R^1SiHCl_2$ in einer Vorstufe zum erfindungsgemäßen Prozeß, nämlich bei der Herstellung der als Ausgangsmaterial verwendeten Oligohydridoorganylsilazane (im folgenden auch "Oligosilazane" genannt), wieder einsetzbar. In dieser Vorstufe setzt man Dichlorhydridoorganylsilan $R^1SiHCl_2$, wobei $R^1$ die obige Bedeutung besitzt, mit $NH_3$ in einem Lösungsmittel um, wie in US-PS 4 482 669 beschrieben (siehe dort insbesondere Spalten 4, 5, 7, 8). Dabei entsteht im allgemeinen ein Gemisch von linearen und cyclischen Oligohydridoorganylsilazanen $(R^1SiHNH)_n$, mit n 3 bis 12.

Die Reste $R^1$ bis $R^5$ in den Oligosilazanen bzw. den Chlorsilanen können gleich oder verschieden sein, vorzugsweise haben sie 1 bis 3 C-Atome. Besonders bevorzugt ist es, daß $R^1 = R^2 = R^4 = R^5 = CH_3$ und $R^3 = CH_3$ oder Vinyl ist. Vorzugsweise beträgt das molare Verhältnis der Reaktanten bei der obigen Umsetzung Chlorsilan: $R^1SiHNH$-Einheit des Oligosilazans 0,1:1 bis 1,5:1, insbesondere 0,3:1 bis 1:1.

Zur Umsetzung der Reaktanten miteinander werden vorzugsweise die Oligosilazane vorgelegt und die Chlorsilane zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Die als Nebenprodukte gebildeten Leichtsieder, wie $RSiHCl_2$, $RSiClH_2$, $RSiCl_3$, HCl, $H_2$, $NH_3$ (wobei R gleich $R^1$ oder $R^2$ oder $R^3$ ist), entweichen während der Reaktion teilweise. Nach beendeter Umsetzung werden die restlichen Leichtsieder im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem erfindungsgemäß hergestellten polymeren Hydridochlorsilazan abgetrennt werden.

Die Reaktionsdauer richtet sich nach der Geschwindigkeit des Aufheizens und der Reaktionstemperatur. Im allgemeinen genügt eine Reaktionszeit von 5 bis 7 Stunden.

Vorzugsweise arbeitet man in Abwesenheit eines Lösungsmittels, aber es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die erfindungsgemäßen polymeren Hydridochlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1,013 bis 10,13 bar kann gearbeitet werden.

Das Verfahren kann auch kontinuierlich gestaltet werden.

Die hergestellten polymeren Hydridochlorsilazane haben eine molekulare Struktur, die näherungsweise durch die Formel (I)

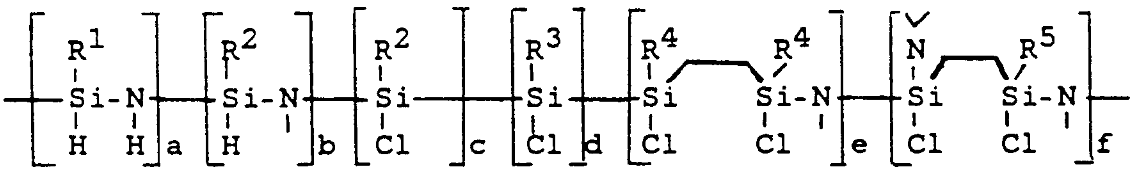

wiedergegeben werden kann, wobei die freien Valenzen an den Stickstoffatomen mit H-Atomen oder Silylresten R*SiXN< (X = H, Cl, N<, $CH_2CH_2Si\leftarrow$) abgesättigt sind.

Dabei gilt:

$R^1$, $R^2$, $R^3$, $R^4$, $R^5$, $R^*$ = $C_1$-$C_6$-Alkyl- oder $C_2$-$C_6$-Alkenylgruppe. a, b, c, d, e, f bedeuten die Molfraktionen der jeweiligen Struktureinheiten. Diese addieren sich zum Wert eins. Vorzugsweise haben $R^1$ bis $R^5$ und $R^*$ 1 bis 3 C-Atome, besonders bevorzugt ist $R^1 = R^2 = R^4 = R^5 = R^* = CH_3$ und $R^3 = CH_3$ oder Vinyl.

Die polymeren Hydridochlorsilazane haben eine netzartige Struktur. Ob die Molfraktionen b, c, d, e, f positive Werte oder den Wert null annehmen, hängt von den eingesetzten Chlorsilanen bei der Reaktion mit dem Oligosilazan $(R^1HSi\text{-}NH)_n$ ab. Wird $(R^1HSi\text{-}NH)_n$ nur mit $Cl_2R^4Si\text{-}CH_2CH_2\text{-}SiR^4Cl_2$ umgesetzt, so ist b = c = d = f = 0; a und e nehmen positive Werte an. Wird $(R^1HSi\text{-}NH)_n$ mit einer Mischung aus $R^2HSiCl_2$ und $Cl_2R^4Si\text{-}CH_2CH_2\text{-}SiR^4Cl_2$ umgesetzt, so ist nur d = f = 0; a, b, c und e nehmen positive Werte an.

Die jeweils vorliegenden Werte von a-f können durch Integration der $^1$H-NMR-Spektren und durch die Elementaranalyse ermittelt werden. Im allgemeinen liegt a bei 0.1 bis 0.9; b, c, d, e liegen im allgemeinen bei 0 bis 0.6. Dabei ist a + b + c + d + e + f = 1. Bevorzugt sind solche polymeren Hydridochlorsilazane, für die a bei 0.7 bis 0.9 liegt, insbesondere bei 0.75 bis 0.85. Die bevorzugten Werte für b, c, d, e, f liegen bei 0.01 bis 0.3, insbesondere bei 0.01 bis 0.2. Diese Werte lassen sich über die genannten Analysenmethoden kontrollieren. Die eben genannten bevorzugten Werte für a, b, c, d, e, f haben sich besonders bewährt, wenn als Endprodukt der Pyrolyse (nach Umwandlung der polymeren Chlorsilazane in Polysilazane) eine Faser hergestellt werden soll.

Ein weiterer Gegenstand der vorliegenden Erfindung sind polymere Hydridochlorsilazane erhältlich nach dem oben beschriebenen Verfahren,

Vorzugsweise werden die bei der Reaktion anfallenden leichter flüchtigen Chlorsilane $R^1SiH_2Cl$ und $R^1SiHCl_2$ getrennt und das abgetrennte $R^1SiHCl_2$ zur Herstellung des Ausgangsmaterials $(R^1SiH\text{-}NH)_n$ wieder eingesetzt.

Die polymeren Hydridochlorsilazane können durch Umsetzung mit Ammoniak ("Ammonolyse") in Polyhydridosilazane überführt werden, die wiederum durch Pyrolyse in Siliziumnitrid enthaltendes keramisches Material umgewandelt werden können.

Die Ammonolyse kann in flüssigem $NH_3$ erfolgen. Es ist jedoch vorteilhaft, sie in einem organischen Lösungsmittel durchzuführen. Geeignet sind alle Lösungsmittel, die sich inert gegenüber den polymeren Hydridochlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymer Hydridochlorsilazan in Lösung vorzulegen und gasförmigen Ammoniak einzuleiten oder flüssigen Ammoniak hinzuzufügen. Wurden die erfindungsgemäßen polymeren Hydridochlorsilazane in einem geeigneten organischen Lösungsmittel hergestellt, so kann die Ammonolyse ohne vorherige Abtrennung des $NH_4Cl$ in diesem Lösungsmittel durchgeführt werden. Die Ammonolyse wird vorzugsweise mit einem Überschuß $NH_3$ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100 °C gearbeitet, vorzugsweise bei -20 bis +30 °C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb

Raumtemperatur, z.B. bei -33 °C bei der Verwendung von flüssigem $NH_3$ zu arbeiten.

Nach beendeter Ammonolyse wird ggf. das überschüssige $NH_3$ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polyhydridosilazane unmittelbar als weiße Pulver erhalten. Die Polyhydridosilazane sind in den obigen organischen Lösungsmitteln löslich, so daß diese sowohl für das Beschichten von Oberflächen als auch für die Herstellung von Fasern verwendet werden können.

Die Polyhydridosilazane können durch Pyrolyse in inerter Stickstoff- oder Argonatmosphäre bei Temperaturen von 800 bis 1200 °C zu amorphen, dichten Materialien pyrolysiert werden, die im wesentlichen aus Si, N und C bestehen und in Spuren auch H und O enthalten können. Bei Pyrolysetemperaturen oberhalb 1200 °C, etwa im Bereich von 1200 °C bis 1400 °C, entstehen teilamorphe, mikrokristalline keramische Werkstoffe, die als kristalline Phase $\alpha$-$Si_3N_4$ enthalten.

Ein besonderer Vorteil ist, daß sich die Polyhydridosilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polyhydridosilazans in Lösungsmitteln, wie Toluol, THF oder Hexan ziehen. Das Fasernziehen geschieht vorteilhafterweise mittels Spinndüsen von 80 bis 150 $\mu$m Durchmesser. Durch anschließendes Strecken wird der Faden verjüngt, so daß nach der Pyrolyse ein sehr fester Faden von 2 bis 20 $\mu$m, insbesondere 5 bis 15 $\mu$m Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polyhydridosilazane ist die Herstellung dichter, gut haftender, amorpher oder mikrokristalliner keramischer Beschichtungen auf Metallen, insbesondere Stählen. Die Beschichtung erfolgt mit Hilfe einer Lösung des Polyhydridosilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200 °C bzw. 1200 bis 1400 °C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polyhydridosilazane mit gleichhoher keramischer Ausbeute von 70 bis 90 % statt in Inertgas auch in $NH_3$-Atmosphäre pyrolysieren. Dabei resultiert ein praktisch kohlenstofffreier, glasklarer, farbloser Werkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200 °C) oder kristallinem $Si_3N_4$ (Pyrolyse oberhalb 1200 °C, insbesondere oberhalb 1300 °C). Die Pyrolyse in $NH_3$ läßt sich auf alle nach den oben beschriebenen Formgebungsverfahren hergestellten Formkörper, also aus Pulvern geformte Körper, Fasern, Beschichtungen anwenden.

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

In diesem Fall, wo also das intermediär gebildete Polysilazan nicht isoliert wird, muß die Formgebung natürlich bereits auf der Stufe der polymeren Chlorsilazane erfolgen, d.h. mit diesen werden bereits Fasern oder Beschichtungen oder Formkörper hergestellt, die dann mit $NH_3$ umgesetzt und pyrolysiert werden.

## Versuchsbericht

### Herstellung von Oligohydridomethylsilazan $(CH_3SiHNH)_n$

In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 20 bis 25 °C gehalten. Zur Vervollständigung der Reaktion wurde 1 h bei Raumtemperatur gerührt und anschließend unter Argon das Ammoniumchlorid abgetrennt. Der Niederschlag wurde 2 mal mit je 350 ml THF gewaschen und die vereinigten THF-Lösungen unter reduziertem Druck eingeengt. Man erhielt ein klares, leicht bewegliches Öl von $(CH_3SiHNH)_n$ in einer Ausbeute von 44,5 g = 78% der Theorie.

## Beispiele

**Beispiel 1** nicht erfindungsgemäß

Reaktion des Oligosilazans $(CH_3SiHNH)_n$ mit einem Gemisch aus Vinyltrichlorsilan $CH_2=CHSiCl_3$ und Methyldichlorsilan $CH_3SiHCl_2$ sowie anschließende Pyrolyse zu $Si_3N_4$-haltigem Material.

54,6 g (0,93 mol) $(CH_3SiH\text{-}NH)_n$ wurden in 150 ml trockenem Toluol gelöst und unter Rühren mit 88,8 g (0,55 mol; 70 ml) Vinyltrichlorsilan und 5,6 g (0,05 mol; 5 ml) Methyldichlorsilan versetzt. Anschließend wurde 3 h am Rückfluß gekocht, wobei sich ein weißer Niederschlag bildete.

Daraufhin wurden alle flüchtigen Bestandteile bei langsamer Erniedrigung des Druckes auf 0,1 mbar und langsamer Temperaturerhöhung auf 220 °C abdestilliert. Diese enthielten auch $CH_3SiHCl_2$ und $CH_3SiH_2Cl$ im Verhältnis 4 zu 1 (kein $C_2H_3SiHCl_2$ oder $C_2H_3SiH_2Cl$). Unter diesen Bedingungen sublimierte der ursprünglich ausgefallene weiße Niederschlag ab und es blieben 43 g einer klaren, farblosen Schmelze zurück, welche bei 20 °C glasartig erstarrt war.

$^1$H-NMR-Daten: $SiCH_3$ $\delta$ = 0.0 - 0.9 ppm (br), Intens. 15
NH $\delta$ = 1.0 - 1.8 ppm (br), " 4
SiH $\delta$ = 4.4 - 5.2 ppm (br), " 3
SiVinyl $\delta$ = 5.5 - 6.3 ppm (br), " 8

| Elementaranalyse (Gew.-%): | | | | | | |
|---|---|---|---|---|---|---|
| Gefunden: | Si | 36.2 % | N | 17.7 % | Cl | 14.7 % |
| | C | 25.3 % | H | 5.3 % | O | 0.3 % |
| Berechnet: | Si | 40.9 % | N | 14.3 % | Cl | 15.6 % |
| | C | 22.8 % | H | 6.4 % | | |

Struktur: Formel (I) mit a = 0.7, c = 0.02, d = 0.3, b = e = f = O, $R^1 = CH_3$, $R^3$ = Vinyl:

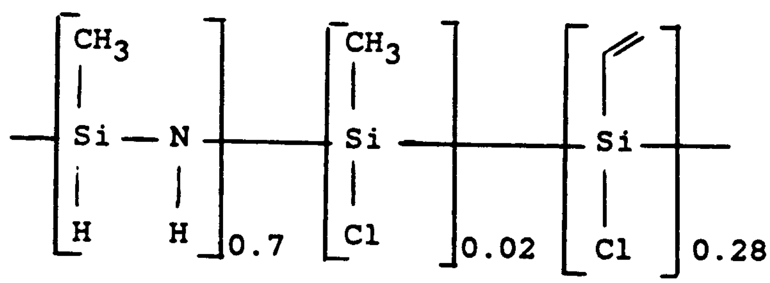

Die keramische Ausbeute bei der anschließenden Pyrolyse in $N_2$ betrug 84%, in Ar 85%.

**Beispiel 2** nicht erfindungsgemäß

Reaktion des Oligosilazans $(CH_3SiHNH)_n$ mit einem Gemisch aus Methyldichlorsilan $CH_3SiHCl_2$ und Vinyltrichlorsilan $CH_2=CHSiCl_3$ und anschließende Pyrolyse zu $Si_3N_4$-haltigem Material.

30 g (0,51 mol) $(CH_3SiHNH)_n$ wurden in 100 ml trockenem Toluol gelöst und unter Rühren mit einem Gemisch aus 17,2 g (0,15 mol; 15,5 ml) $CH_3SiHCl_2$ und 24,2 g (0,15 mol; 19,1 ml) Vinyltrichlorsilan versetzt. Anschließend wurde die anfänglich klare Lösung 3 h am Rückfluß gekocht, wobei sich ein weißer Niederschlag bildete.

Daraufhin wurden alle flüchtigen Bestandteile bei langsamer Erniedrigung des Druckes auf 0,1 mbar und langsamer Temperaturerhöhung auf 220 °C abdestilliert. Unter diesen befanden sich auch $CH_3SiHCl_2$

und $CH_3SiH_2Cl$ im Verhältnis 2 zu 1. Vinyldichlorsilan oder Vinylchlorsilan konnten nicht nachgewiesen werden.

Unter den genannten Bedingungen sublimierte der weiße Niederschlag ab und es bleiben 24,2 g einer klaren, farblosen Schmelze zurück, welche bei 20 °C glasartig erstarrt war.

$^1$H-NMR-Daten: $SiCH_3$ δ = 0.0 - 0.9 ppm (br), Intens. 18
NH δ = 1.0 - 1.8 ppm (br), " 3,1
SiH δ = 4.4 - 5.2 ppm (br), " 3,7
SiVinyl δ = 5.5 - 6.3 ppm (br), " 4,9

| Elementaranalyse (Gew.-%): | | | | | | |
|---|---|---|---|---|---|---|
| Gefunden: | Si | 39.6 % | N | 17.4 % | Cl | 12.7 % |
| | C | 20.6 % | H | 6.2 % | O | 0.6 % |
| Berechnet: | Si | 42.5 % | N | 15.7 % | Cl | 14.0 % |
| | C | 21.5 % | H | 6.3 % | | |

Struktur: Formel (I) mit a = 0.46, b = 0.28, c = 0.08, d = 0.18, e = f = 0, $R^1$ = $R^2$ = $CH_3$, $R^3$ = Vinyl:

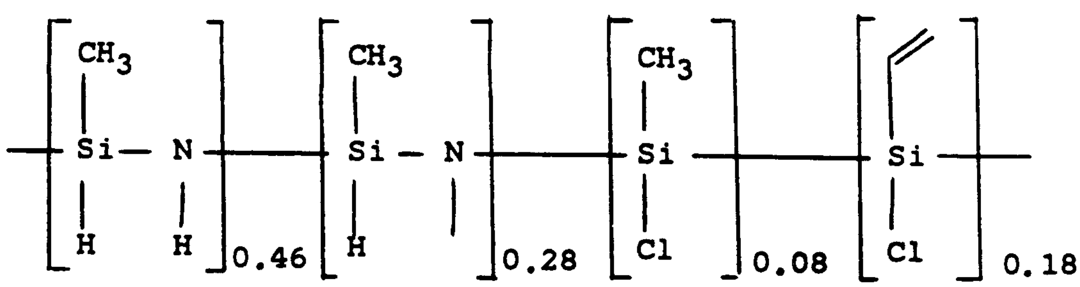

Die keramische Ausbeute bei der anschließenden Pyrolyse in $N_2$ betrug 82 %, in Ar 78 %.

**Beispiel 3** nicht erfindungsgemäß

Reaktion des Oligosilazans $(CH_3SiHNH)_n$ mit einem Gemisch aus Methyldichlorsilan und Methyltrichlorsilan und anschließende Pyrolyse zu $Si_3N_4$-haltigem Material.

Das Vorgehen entsprach dem in Beispiel 2 beschriebenen, aber mit folgenden Ausgangsmaterialien:
31 g (0,53 mol) $(CH_3SiHNH)_n$
18,4 g (0,16 mol) $CH_3SiHCl_2$
23,9 (0,16 mol) $CH_3SiCl_3$
Das Kondensat enthielt Methyldi- und Methylchlorsilan im Verhältnis 1 zu 1. Es wurden 21 g einer klaren, durchscheinenden, spröden Substanz erhalten.

$^1$H-NMR-Daten: $SiCH_3$ δ = 0.0 - 0.9 ppm (br), Intens. 18
NH δ = 1.0 - 2.0 ppm (br), " 1,8
SiH δ = 4.4 - 5.2 ppm (br), " 2

| Elementaranalyse (Gew.-%): | | | | | | |
|---|---|---|---|---|---|---|
| Gefunden: | Si | 39.3 % | N | 16.3 % | Cl | 19.8 % |
| | C | 18 % | H | 6.1 % | | |
| Berechnet: | Si | 42.7 % | N | 17.1 % | Cl | 21.6 % |
| | C | 18.3 % | | | | |

Struktur: Formel (I) mit a = 0.2, b = 0.4, d = 0.4, c = e = f = 0, $R^1 = R^2 = CH_3$, $R^3 = CH_3$:

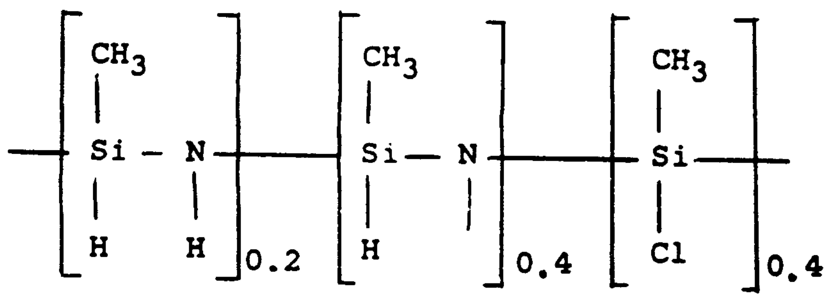

Die keramische Ausbeute bei der anschließenden Pyrolyse in $N_2$ betrug 62 %, in Ar 66 %.

**Beispiel 4**

Reaktion des Oligosilazans $(CH_3SiHNH)_n$ mit 1,2-Bis(methyldichlorsilyl)-ethan $Cl_2CH_3Si\text{-}CH_2\text{-}CH_2\text{-}SiCH_3Cl_2$ und anschließende Pyrolyse zu $Si_3N_4$-haltigem Material.

Das Vorgehen entsprach dem in Beispiel 1 beschriebenen, jedoch mit folgenden Ausgangsmaterialien:
45 g (0,76 mol) $(CH_3SiH\text{-}NH)_n$
70 g (0,27 mol) $Cl_2CH_3Si\text{-}CH_2\text{-}CH_2\text{-}SiCH_3Cl_2$
Es wurden 35,3 g einer klaren gelblichen, glasartigen Substanz erhalten.

$^1$H-NMR-Daten:

$SiCH_3$ und $Si\text{-}CH_2CH_2\text{-}Si$ $\delta$ = 0.0 - 0.9 ppm (br), Intens. 19
NH $\delta$ = 0.9 - 1.3 ppm (br), " 0,3
SiH $\delta$ = 4.5 - 5.1 ppm (br), " 1,1

| Elementaranalyse (Gew.-%): | | | | | | |
|---|---|---|---|---|---|---|
| Gefunden: | Si | 35.1 % | N | 13.3 % | Cl | 17.4 % |
| | C | 25.2 % | H | 6.4 % | | |
| Berechnet: | Si | 36.0 % | N | 13.9 % | Cl | 21.1 % |
| | C | 22.6 % | H | 6.4 % | | |

Struktur: Formel (I) mit a = 0.7, e = 0.3; b = c = d = f = 0, $R^1 = R^4 = CH_3$

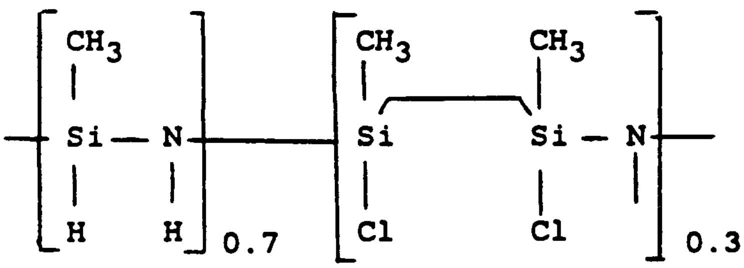

## Patentansprüche

1. Verfahren zur Herstellung von polymeren Hydridochlorsilazanen, dadurch gekennzeichnet, daß man Oligohydridoorganylsilazane der allgemeinen Formel $(R^1SiHNH)_n$, worin n 3 bis 12 ist, mit mindestens einem der Chlorsilane $R^2SiHCl_2$, $R^3SiCl_3$, $Cl_2R^4Si\text{-}CH_2CH_2\text{-}SiR^4Cl_2$, $Cl_3Si\text{-}CH_2CH_2\text{-}SiR^5Cl_2$ bei 30 °C bis 300 °C umsetzt, wobei unabhängig voneinander
   $R^1$, $R^2$, $R^3$, $R^4$, $R^5$ = $C_1$-$C_6$-Alkyl- oder $C_2$-$C_6$-Alkenylgruppe und wobei $R^2SiHCl_2$ und $R^3SiCl_3$ nur im Gemisch mit mindestens einem der $R^4$ oder $R^5$ enthaltenden Chlorsilane eingesetzt wird.

2. Verfahren zur Herstellung von polymeren Hydridochlorsilazanen, dadurch gekennzeichnet, daß man in eines ersten Stufe Oligohydridoorganylsilazane gemäß Anspruch 1 durch die Reaktion eines Dichlorhydridoorganylsilans $R^1HSiCl_2$ mit $NH_3$ in einem Lösungsmittel herstellt und in eines zweiten Stufe gemäß Anspruch 1 mit mindestens einem Chlorsilan umsetzt.

3. Verfahren nach Anspruch 1 oder 2, dadurch gekennzeichnet, daß $R^1$ bis $R^5$ $C_1$-$C_3$-Alkylgruppen oder $C_2$-$C_3$-Alkenylgruppen bedeuten.

4. Verfahren nach Anspruch 1 oder 2, dadurch gekennzeichnet, daß $R^1 = R^2 = R^4 = R^5 = CH_3$ und $R^3$ = $CH_3$ oder Vinyl ist.

5. Verfahren nach einem der Ansprüche 1 bis 4, dadurch gekennzeichnet, daß das molare Verhältnis der Chlorsilane zu einer $R^1$SiHNH-Einheit des Oligohydridoorganylsilazans 0,1 : 1 bis 1,5 : 1 beträgt.

6. Verfahren nach einem der Ansprüche 1 bis 5, dadurch gekennzeichnet, daß man beim Zusammengeben der Reaktanten eine Temperatur von 30 °C bis 50 °C einhält und anschließend auf 100 °C bis 300 °C erhitzt.

7. Polymere Hydridochlorsilazane, erhältlich nach dem Verfahren gemäß einem der Ansprüchen 1 bis 6.

## Claims

1. A process for the preparation of polymeric hydridochlorosilazanes, which comprises reacting oligohydridoorganosilazanes of the formula $(R^1SiHNH)_n$, in which n is 3 to 12, with at least one of the chlorosilanes $R^2SiHCl_2$, $R^3SiCl_3$, $Cl_2R^4Si\text{-}CH_2CH_2\text{-}SiR^4Cl_2$ or $Cl_3Si\text{-}CH_2CH_2\text{-}SiR^5Cl_2$ at 30 °C to 300 °C, where independently of one another
   $R^1$, $R^2$, $R^3$, $R^4$, $R^5$ = a $C_1$-$C_6$ alkyl or $C_2$-$C_6$ alkenyl group, and where $R^2SiHCl_2$ and $R^3SiCl_3$ are used only as a mixture with at least one of the chlorosilanes containing $R^4$ or $R^5$.

2. A process for the preparation of polymeric hydridochlorosilazanes, which comprises in a first stage preparing oligohydridoorganosilazanes as in claim 1 by reacting a dichlorohydridoorganosilane $R^1HSiCl_2$ with $NH_3$ in a solvent and in a second stage reacting it as in claim 1 with at least one chlorosilane.

3. A process as claimed in claim 1 or 2, wherein $R^1$ to $R^5$ are $C_1$-$C_3$ alkyl groups or $C_2$-$C_3$ alkenyl groups.

4. A process as claimed in claim 1 or 2, wherein $R^1 = R^2 = R^4 = R^5 = CH_3$ and $R^3 = CH_3$ or vinyl.

5. A process as claimed in any of claims 1 to 4, wherein the molar ratio of the chlorosilanes to an $R^1SiHNH$ unit of the oligohydridoorganosilazane is 0.1:1 to 1.5:1.

6. A process as claimed in any of claims 1 to 5, wherein the temperature is kept at 30 °C to 50 °C when the reactants are brought together and the reaction mixture is then heated at 100 °C to 300 °C.

7. A polymeric hydridochlorosilazane which can be obtained by the process as claimed in any of claims 1 to 6.

## Revendications

1. Procédé de préparation d'hydridochlorosilazanes polymères, caractérisé en ce qu'on fait réagir à 30 °C à 300 °C des oligohydridoorganylsilazanes répondant à la formule générale $(R^1SiHNH)_n$, dans laquelle n est un nombre de 3 à 12, avec au moins un des chlorosilanes $R^2SiHCl_2$, $R^3SiCl_3$, $Cl_2R^4Si-CH_2CH_2-SiR^4Cl_2$, $Cl_3Si-CH_2CH_2-SiR^5Cl_2$, les symboles $R^1$, $R^2$, $R^3$, $R^4$ et $R^5$ étant indépendamment les uns des autres un groupe alkyle en $C_1$-$C_6$ ou alcényle en $C_2$-$C_6$, et $R^2SiHCl_2$ et $R^3SiCl_3$ n'étant utilisés qu'en mélange avec au moins un des chlorosilanes contenant $R^4$ ou $R^5$.

2. Procédé de préparation d'hydridochlorosilazanes polymères, caractérisé en ce qu'on prépare dans un premier stade des oligohydridoorganylsilazanes conformément à la revendication 1, par réaction d'un dichlorhydridoorganylsilane $R^1$-$HSiCl_2$ avec $NH_3$ dans un solvant, et en ce qu'on les fait réagir dans un deuxième stade conformément à la revendication 1 avec au moins un chlorosilane.

3. Procédé selon les revendications 1 ou 2, caractérisé en ce que $R^1$ à $R^5$ désignent des groupes alkyle en $C_1$-$C_3$ ou alcényle en $C_2$-$C_3$.

4. Procédé selon la revendication 1 ou 2, caractérisé en ce que $R^1 = R^2 = R^4 = R^5 = CH_3$ et $R^3 = CH_3$ ou un groupe vinyle.

5. Procédé selon l'une quelconque des revendications 1 à 4, caractérisé en ce que le rapport molaire des chlorosilanes à un motif $R^1SiHNH$ de l'oligohydridoorganylsilazane est de 0,1:1 à 1,5:1.

6. Procédé selon l'une quelconque des revendications 1 à 5, caractérisé en ce qu'on maintient lors de l'addition des réactifs une température de 30 °C à 50 °C, puis on chauffe à 100 °C à 300 °C.

7. Hydridochlorosilazanes polymères pouvant être obtenus par le procédé conforme à l'une des revendications 1 à 6.